# EUROPEAN PATENT APPLICATION

(11) **EP 2 754 551 A1**
(43) Date of publication of application: **16.07.2014**
(21) Application number: 12839849.2
(22) Date of filing: 24.07.2012
(51) Int. Cl.: B29D 30/16, B60C 9/22

(54) **METHOD FOR MANUFACTURING PNEUMATIC TIRE, AND PNEUMATIC TIRE MANUFACTURED BY SAME**

(30) Priority: 11.10.2011 JP 2011224211
(71) Applicant: Sumitomo Rubber Industries, Ltd., Kobe-shi, Hyogo 651-0072 (JP)
(72) Inventor: FUKUMOTO Toru, Kobe-shi Hyogo 651-0072 (JP)
(74) Representative: Manitz, Finsterwald & Partner GbR
(86) International application number: PCT/JP2012/068699
(87) International publication number: WO 2013/054579

(57) **Abstract**

According to a method for manufacturing a pneumatic tire of the present invention using a rigid core, high-speed durability may be improved. The present invention comprises manufacturing a green tire in which the green tire is manufactured by adhering tire component members in sequence onto the rigid core. The manufacturing of the green tire comprises forming a band ply in which a band forming member is spirally wound on the rigid core to form the band ply, the band formi ng member bei ng configured by a band cord, or a narrow band-shaped strip coated wi th a toppi ng rubber. In the formati on of the band ply, the bend forming member is heated to a temperature of above 100 deg. C while being wound spirally with the bend formi ng member bei ng extended by at not less than 0.5%.

## Description

### TECHNICAL FIELD

The present invention relates to a method for manufacturing a pneumatic tire with a rigid core, and the pneumatic tire manufactured by the same.

### TECHNICAL FIELD

In a radial-structured pneumatic tire, there is a problem of decreasing high-speed durability due to a so-called lifting phenomenon. The lifting phenomenon means that a centrifugal force at a ti me of ti re rolling causes a swelling in the tread portion outward in the redial di recti on. This lifting phenomenon provokes delaminating damage beginning at an outer end of belt layer. Therefore, the radial-structured pneumatic tire is provided on an outside of the belt layer with a band ply formed by spirally wi ndi ng an organic fiber band cord. And a hoop effect of the band pl y suppresses the lifting phenomenon.

As a method for manufacturing pneumatic ti re, the following manufacturing method has been employed before. In the conventional manufacturing method, a green ti re is formed smaller than a finished tire. The green ti re expands in a vulcanizing mold (hereinafter may be called a vulcanizing stretch) at the time of vulcanization shapi ng owi ng to an internal pressure filling. In this time, the outer surface of the green tire is pushed to the inner surface of the mold. In such a finished tire manufactured in this conventional manufacturing method, the band cord already extends from 3% to 4% due to the above-mentioned vulcanizing stretch under a condition of before filling the inner pressure. Thus, when employing a nylon cord having a relatively small modulus as a band cord, a sufficient hoop effect is exerted in use. A binding force of the band cord is therefore improved, and the lifting phenomenon is suppressed.

However, a tire manufacturing method with a rigid core (hereinafter may be called a core construction method) is recently proposed (see Patent Document 1). The rigid core comprises a similar outer surface to an inner surface form of the finishing tire. In this core construction method, the tire component members are adhered in sequence on the outer surface of the rigid core. The ti re component members comprise an unvulcanized carcass ply, a belt ply, a band ply, a bead core, a tread rubber, a sidewall rubber and the like. They make the green tire having substantially the same form as the fi ni shed tire. And, the green tire is put into the vulcanizing mold with the rigid core and is vulcanized.

The finished tire manufactured in core construction method is not conducted by the vulcanizing stretch. In the condi ti on of before filling the internal pressure to the tire, therefore the band cord arises little extension and leads to a lack of binding force. Thus, there is a probl em that the ti re manufactured in the core constructi on method is inferior in an enhanci ng effect of the hi gh-speed durability to the tire manufactured in the conventional method.

### BACKGROUND OF THE INVENTION

### PATENT DOCUMENT

Patent document 1: Japanese Unexamined Patent Application Publication No. H11-254906

### DISCLOSURE OF THE INVENTION

### PROBLEM TO BE SOLVED BY THE INVENTION

It is an object of the invention to provide a method for manufacturing pneumatic tire and the pneumatic tire manufactured by the same capable of conducti ng binding force as well as a conventional method and i mprovi ng the hi gh-speed durability. It i based on spirally winding band forming member such as band cord in a condition of being heated to not less than 100 deg. c and being extended to not less than 0.5%.

### MEANS FOR SOLVING THE PROBLEM

To achieve the above-mentioned problem, in the invention set forth in claim 1 of the present invention, a method for manufacturing pneumatic tire comprises
a carcass formed of a carcass ply extending from a tread portion through a sidewall portion to each of both bead portions,
a belt layer formed of a belt ply disposed radially outside the carcass and inside the tread portion, and
a band layer formed of a band ply disposed radially outside the belt layer.

A method comprises
a green tire forming process to form a green tire by adhering in sequence tire component members including an unvulcanised carcass ply, a belt ply, and a band ply on an outer surface of a rigid core, and
a vulcanizing process to vulcanize the green tire put into a vulcanizing mold with the rigid core.

The green ti re forming process comprises a band ply forming step to form a band ply by winding a band forming member, which is made of a band cord or a narrow band-shaped strip made of the band cord covered with topping rubber, spirally on the rigid core via the belt ply. In the band ply forming step, the band forming member is spirally wound under a condition of the band forming member being heated to not less than 100 deg. c and stretched to not less than 0.5%.

In claim 2, the band cord is made of nylon cord, PET (polyethylene terephthal ate) cord, or PEN(polyethylenenaphthalate) cord.

claim 3 relates to a pneumatic ti re manufactured in the method as set forth in claim 1 or 2.

### EFFECT OF THE INVENTION

In the band ply forming step of the core construction method in the present invention, the band formi ng member is spirally wound in the condition of bei ng heated to not less than 100 deg. C and bei ng extended to not less than 0.5%.

The core construction method does not cause the vulcanizing stretch. The core construction method needs the following method to improve the binding force of the band ply: in the band ply forming step, conducting above a certain tension on the band forming member, and winding while stretching the band cord. In the present invention in this time, the band cord increa ses in temperature to not less than 100 deg. c. This makes the cord stretchy, and the cord can be wound while extending the cord more than the cord tensioned at normal temperature. Moreover, since the band cord is wound at not less than 100 deg. c, the band cord develops heat shrinking force at a cool down time. Therefore, in combination wi th the cord extensi on while winding, the band ply has further binding force. Therefore, it becomes possible to improve enhancing effect as well as the conventional method.

### BRIEF DESCRIPTION OF THE DRAWINGS

Fig. 1 is a cross-sectional view showing an embodiment of a pneumatic tire manufactured in the manufacturing method of the present invention.
Fig. 2 is a cross-secti onal vi ew showing a green tire formi ng process.
Fig. 3 is a cross-sectional view showing a vulcanizing process.
Fig. 4 is a cross-sectional view showing a band ply forming step.
Fig. 5 is a di agrammati c perspective vi ew showing the band ply formi ng step.
Fig. 6 is a diagrammatic perspective view showing a strip for the band ply.

### MODE FOR CARRYING OUT THE INVENTION

Hereinafter, an embodiment of the present invention will be particularly described.

Fi g. 1 is a cross-secti onal vi ew showing an example of a pneumatic tire 1 manufactured in the manufacturing method of the present invention. The pneumatic tire 1 comprises a carcass 6, a belt layer 7, and a band layer 9. The carcass 6 extends from a tread portion 2 through a sidewall portion 3 to a bead portion 4. The belt layer 7 is disposed radially outside the carcass 6 and inside the tread portion 2. The band layer 9 is disposed radially outside the belt layer 7.

The carcass 6 is formed of at least one carcass ply. In the present example, the carcass 6 is formed of one carcassply 6A comprising a radially arrayed carcass cord. This carcass ply 6A is toroidal and extending between the bead portions 4, 4. In the present embodiment, both ends of the carcass ply 6A are not turned up around each of the bead cores 5 disposed in the bead portion 4. The both ends of the carcass ply 6A terminate in the bead cores 5. specifically, each of the bead cores 5 comprises an axially inner core piece 5i and an axially outer core pi ece 5o. The both ends of the carcass ply 6A are sandwiched between the inner core piece 5i and the outer core piece 5o.

The inner core piece 5i and the outer core piece 5o are formed by winding the non-extensible bead wire 5a in whorl in the tire circumferential direction of the tire. At this time, the number of winding bead wire 5a in the outer core piece 5o is preferably about 1.2 to 2.0 times larger than the number of winding the bead wire 5a in the inner core piece 5i, for example. Thus, the rigidity of the outer core piece 5o is larger than the rigidity of the inner core pi ece 5i . This hel ps the total number of the wi ndi ng of the bead wi re 5a to be regulated while relatively improving the bending rigidity of the bead portion 4, thereby improving steering stability and the like. Also, a reference number 8 in the drawings means a bead apex. This bead apex 8 is made of a rubber having a rubber hardness of about from 80 to 100, for example. The bead apex 8 rises from each of the inner core pi ece 5i and the outer core pi ece 5o in a tapered manner, and this improves the bead rigidity. In this description, the rubber hardness means a durometer-type hardness A based on JIS-K6253 and means a durometer-type measured under a condition of 23 deg. c.

The belt layer 7 comprises at least one belt ply. In this embodiment, the belt layer 7 comprises two belt plies 7A, 7A. And, the belt ply 7A comprises a belt cord arranged and inclined at an angle of from 10 to 35 deg. with respect to the tire circumferential direction. Between the belt plies 7A, 7A, the belt cords intersect with each other. This makes an improvement of the belt rigidity, and the substantially overall width of the tread portion 2 is solidly reinforced with the hoop effect of the belt layer 7.

The band layer 9 comprises a band ply 9A. The band ply 9A comprises a band cord spirally wound in the tire circumferential direction. For this band ply 9A, an edge band pl y and a full band pl y are arbitrarily employed. The edge band ply covers only the axially outer end portion of the bel t layer 7. The full band pl y covers the substantially overall wi dth of the bel t layer 7. In this embodiment, the band layer 9 comprises a single full band ply.

Inside the carcass 6, there is an inner liner 10 forming a ti re cavity surface 1s. The inner liner 10 is made of non-breathabl e rubber such as butyl rubber, halogenated butyl rubber and the like. This airtightly keeps the air filled in the ti re cavity. Outside the carcass 6, there is a sidewall rubber 11 forming an outer surface of the sidewall portion 3; and radially outside of the band layer 9, there is a tread rubber 12 of the tread portion 2, respectively.

Here explained is the manufacturing method of the pneumatic tire 1.

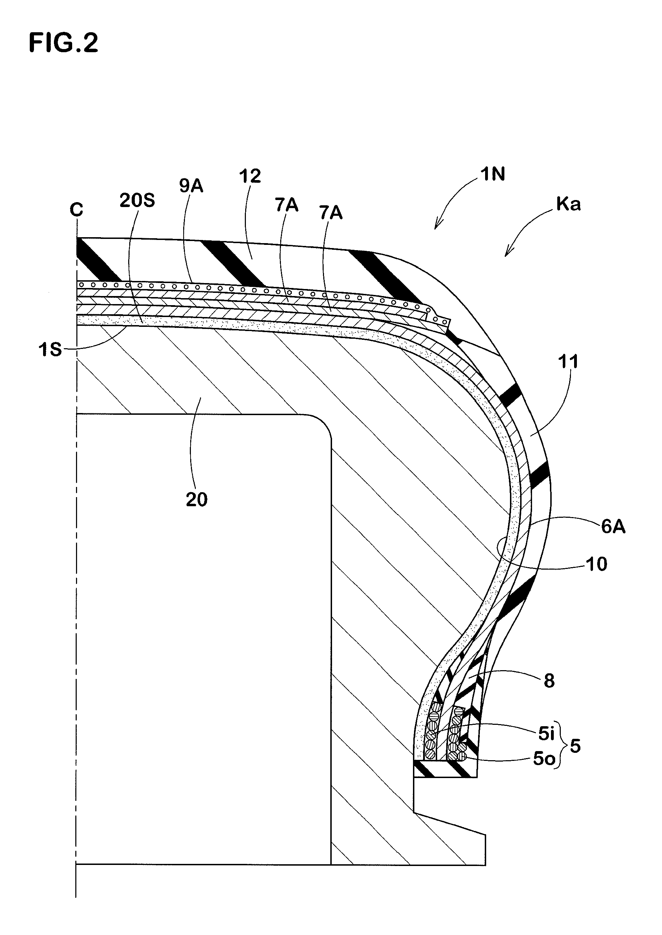

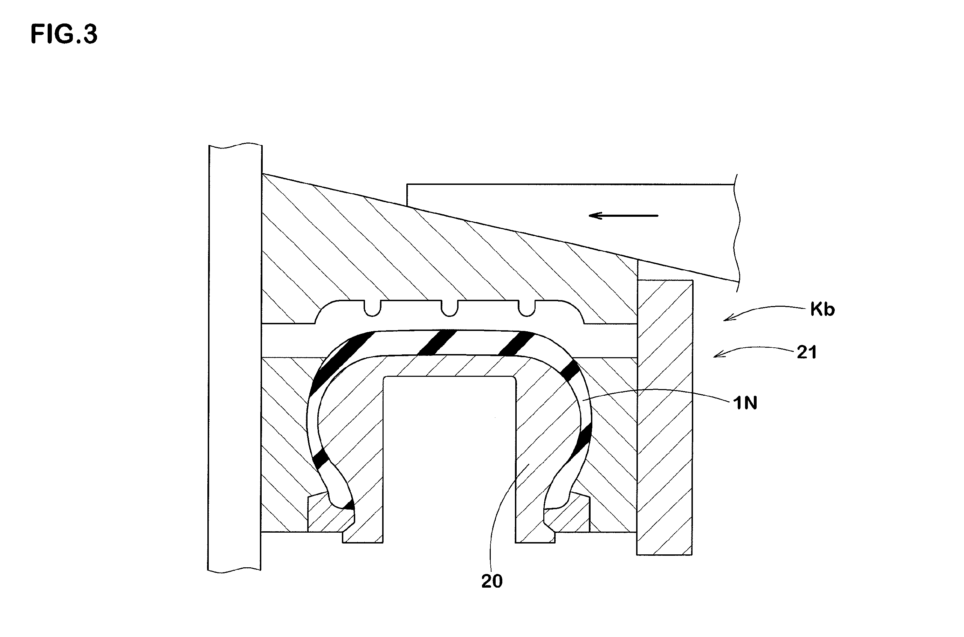

This manufacturing method comprises a green ti re forming process Ka and a vulcanizing process Kb. As schematically shown in Fig. 2, in the green tire forming process Ka, tire component members are in sequence adhered on the outer surface of the rigid core 20, and this makes the green tire 1N similar form to the pneumatic tire 1. The tire component members include the unvulcanized carcass ply 6A, belt ply 7A, and band ply 9A. As schematically shown in Fig. 3, in the vulcanizing process Kb, the green ti re 1N is put into the vulcanizing mold 21 with the rigid core 20 and vulcanized. The outer surface of the ri gi d core 20 comprises a ti re formi ng surface 20S. The tire forming surface 20S substantially conforms with the cavity surface 1S of the pneumatic ti re 1. The ti re component members are adhered in sequence onto the tire forming surface 20S.

The green tire formi ng process Ka comprises a band ply formi ng step to form the band ply 9A via the inner liner 10, the carcass ply 6A, and the belt ply 7A on the tire forming surface 20S of the rigid core 20.

strictly, the green tire formi ng process Ka comprises an inner liner forming step, a carcass ply forming step, a bead core forming step, a bel t pl y formi ng step, a sidewall forming step, a tread formi ng step and the like. In the inner liner forming step, the member for forming the inner liner 10 is adhered on the tire forming surface 20S of the rigid core 20. In the carcass ply forming step, the member for forming the carcass ply 6A is adhered. In the bead core forming step, the member for formi ng the bead core 5 and the member for formi ng the bead apex 8 are adhered. In the belt ply forming step, the member for forming the belt ply 7A is adhered. In the sidewall forming step, the member for formi ng the sidewall rubber 11 is adhered. In the tread forming step, the member for forming the tread rubber 12 is adhered.

Among the above, as the steps except the band ply formi ng step, various sorts of conventional methods with use of the rigid core 20 are arbitrarily employed; therefore, the present description is without going into detail.

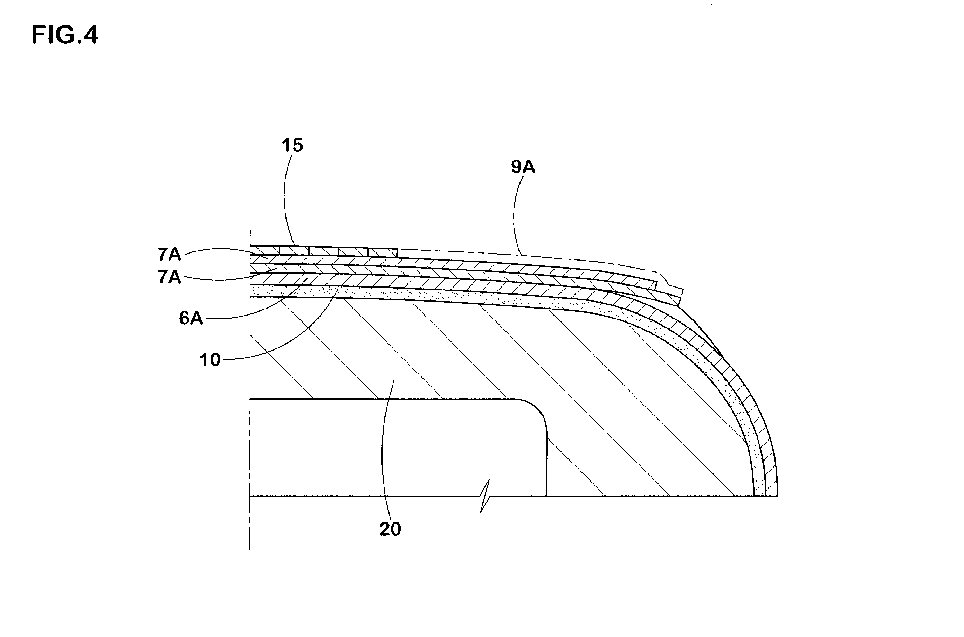

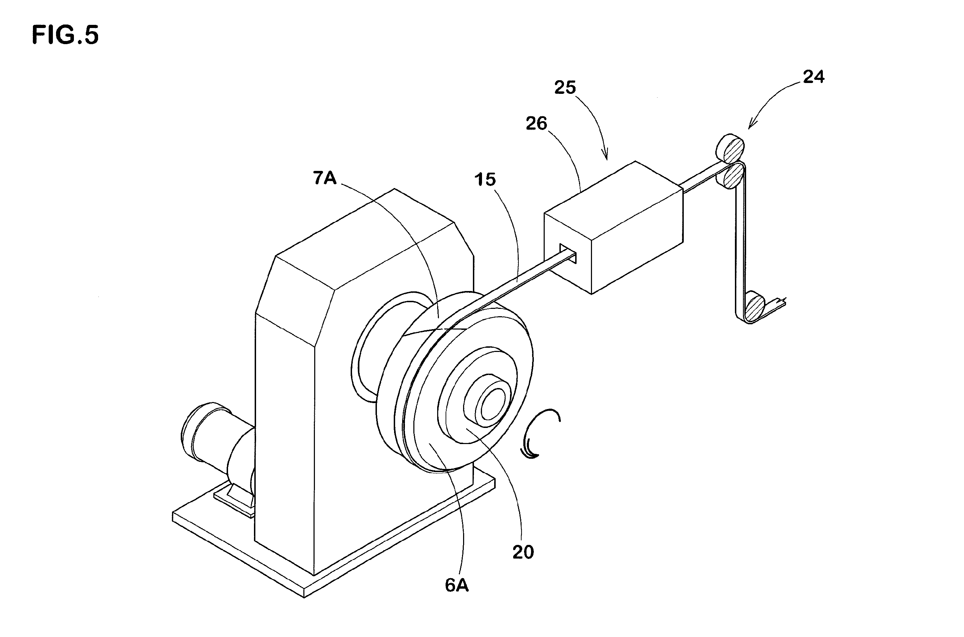

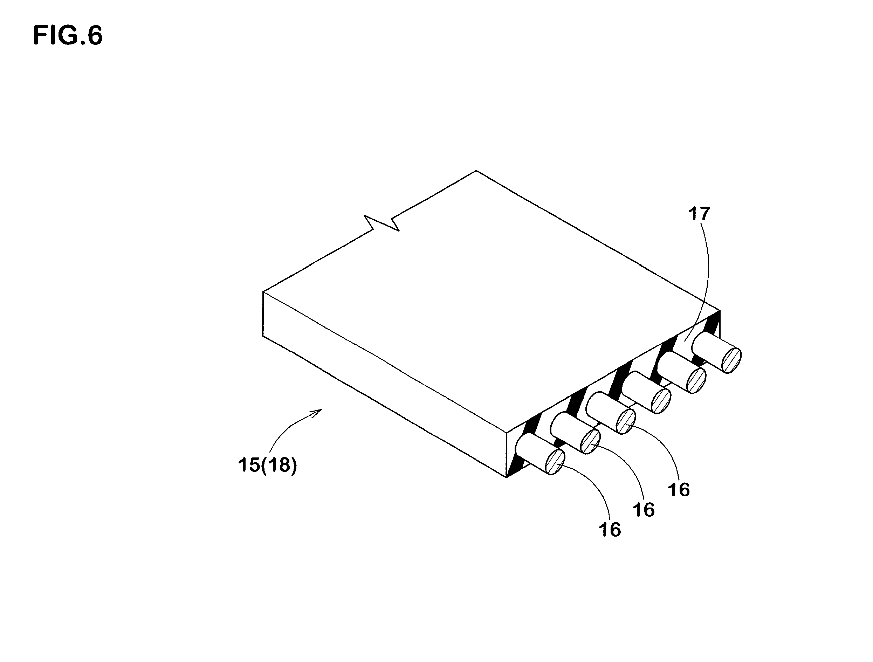

As shown in Figs. 4 and 5, in the band ply forming step, the band forming member 15 is wound spirally on the rigid core 20 via the belt ply 7A. This forms the band ply 9A. The band forming member 15 may be the band cord 16 itself. Also, as shown in Fig. 6, the band forming member 15 may be a narrow band-shaped strip 18. As the narrow band-shaped strip 18, a single band cord 16 covered with a topping rubber 17 or a band cord array comprising plural of band cords 16 parallely arranged and covered with the topping rubber 17 may be employed. When independently employing the band cord 16 for the band forming member 15, it is preferably to apply a thin rubber sheet for adhering the band cord on the outer surface of the belt ply 7A.

The band ply forming step is characterized in that the band forming member 15 is spirally wound under a condition of the band forming member being heated to not less than 100 deg. C and stretched in not less than 0.5%.

As specifically shown in Fig. 5, a supply roller 24 to supply the band forming member 15 to the rigid core 20 is provided with a torque limiter (not shown), for example. The band forming member 15 is conducted by a predetermined tension, and the rigid core 20 is rolled. Thus the band forming member 15 is wound around the rigid core 20. At this time, the band cord 16 of the band forming member is heated to a high temperature above 100 deg. C owing to the heating means 25.

An employment of the heating means 25 is especially not controlled. As shown in Fig. 5, the band forming member 15 passes through the heati ng chamber 26 duri ng conveyance, and the band formi ng member 15 is heated. As the heati ng chamber 26, a mechanism of heated air advancing/circulating into the heati ng chamber 26 from the outsi de or a mechanism providing in the heating chamber 26 with an electrical heater, for example. This makes the heating chamber 26 held at an elevated temperature.

Owing to exert the tension on the band forming member 15, the band cord 16 is wound in an extended state. At this time, the band cord 16 is heated to not less than 100 deg. C, thereby becomi ng stretchy. Therefore, the band cord 16 can be easily wound at the larger extended state of not less than 0.5% than at the extended state of exerting the tension under a common temperature.

The band cord 16 is wound at the temperature of not less than 100 deg. C. Thus, the band cord 16 creates a heat shrinking force when cooling down. Therefore, an interaction between the winding on the extended state of not less than 0.5% and the heat shrinking force after cooling can be obtained. This makes the binding force of the band cord 16 more improved. Therefore, the high-speed durability can be improved as much as the conventional method.

when the temperature of the band cord 16 is less than 100 deg. C, it is difficult to sufficiently improve the binding force of the band cord 16. when the temperature of the band cord 16 is too high, the rubber touching with the band cord 16 is heated by the band cord 16 and gets more vulcanization. Thus, the rubber adhesiveness is liable to decrease. The rubber adhesiveness comprises the adhesiveness between the band cord 16 and the toppi ng rubber 17, or the adhesiveness between the toppi ng rubber 17 and another ti re rubber member adjacent to the topping rubber 17. Therefore, the upper limit of the temperature of the band cord 16 is preferably not more than 180 deg. C, more preferably not more than 150 deg. C.

when the band forming member 15 is formed of the band cord 16, the temperature of the band cord 16 is defined by the surface temperature of the band cord 16 shortly after comi ng out of the heati ng chamber 26. The surface temperature is measured with various temperature sensors. The temperature sensors comprise contact-type and non-contact-type (i nfrared ray type, for example). When the band forming member 15 is formed of the strip 18, the surface temperature of the strip 18 shortly after coming out of the heating chamber 26 is measured with a temperature sensor. The surface temperature of the band cord 16 is calculated from the surface temperature of the strip 18. In this calculation, the previously found relation between the surface temperature of the strip 18 and the surface temperature of the band cord 16 disposed on the inside thereof.

when the extension of the band cord 16 while winding is less than 0.5%, the binding force of the band cord 16 is insufficient; therefore, the high-speed durability does not improved. Thus, the extension is preferably not less than 0. 5%and larger is better. However, when the extension is too large, a tightening force of the band ply 9A increases on the green ti re 1N, and this results in the generation ofdeformati on of the green tire 1N. The deformation causes a propensity to decreasing uniformity. Therefore, the upper limit of the above-mentioned extension is preferably not more than 10%.

As the band cord, an organic fiber cord having a high heat-shrinkable rate is employed. Examples of the cord are nylon cord, PET (polyethylene terephthalate) cord, PEN (polyethylene naphthal ate) cord and the like, for example. These cords are preferably employed because they produce a profound effect of the present invention.

whi 1 e descri pti on has been made of the embodiments of the present invention, the illustrated embodiments should not be construed as to limit the scope of the present invention; various modifications are possi bl e wi thout departi ng from the scope of the present i nventi on.

### EXAMPLES

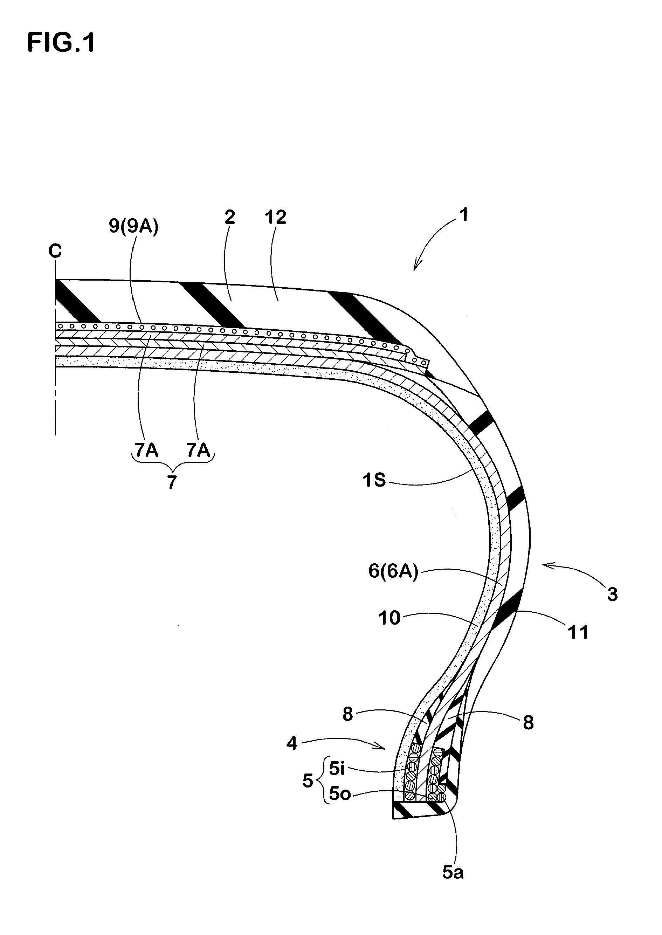

Test pneumatic tires (ti re size: 215/45R17) havi ng an internal structure shown in Fig. 1 were manufactured in the specifications shown in Tables 1 and 2 based on the manufacturing method with the rigid core according to the present invention. Each of the test ti res was tested in high-speed durability. For comparison, conventional tires were tested in the same way. The conventional tires were manufactured in a conventional method having a vulcanizing stretch.

The test tires were substantially specified the same except items of Tables 1 and 2. The common specification regardi ng a carcass, a belt layer, and a band layer was as follows:
Carcass:
   Number of ply: 2
   cord: 1100 dtex (PET)
   cord angle: 90 deg.
   Number of cord: 38/ 5 cm;
Belt layer:
   Number of ply: 2
   cord: 1x3x0.27HT (steel)
   Cord angle: +20 deg./ - 20 deg.
   Number of cord: 40/ 5 cm
Band layer:
   Number of ply: 1 (full band)
   Number of cord: 50/ 5 cm

The test method was as follows. The "heat shrinking stress" of the band cord shown in Tables, was based on the test method of ASTM (American society for Testing and Materials) D5591 and defined as a value measured under the following condition. The measurement condition: a measu ri ng object, band cord, was fi xed at constant length under a condition of initial load of 20 g/cord (25 cm, for example) and measured for two mi nutes at a temperature of 180 deg. C (constant) .

### <High-speed durability>

This test method was conducted with use of drum tester on a step-speed system in reference to the load/speed property test specified in ECE30. The conditions of test were follows:
Rim: 17x7.0 JJ
Internal pressure: 200 kPa
speed: starting from at a speed of 80 km/h and raised by 10km/h each ten minutes.

A running di stance to a breaki ng of the ti re was expressed in an index with Comparative Example 1 being 100.

**[Table 1]**

| | Conventional Example | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 |
|---|---|---|---|---|---|---|---|---|---|---|
| <Band cord> | | | | | | | | | | |
| Material | nylon 66 | nylon 66 | nylon 66 | nylon 66 | nylon 66 | PET | PEN | PEN | aramid | rayon |
| Cord component | 1400 dtex/2 | 1400 dtex/2 | 1400 dtex/2 | 1400 dtex/2 | 940 dtex/2 | 1680 dtex/2 | 1680 dtex/2 | 1100 dtex/2 | 1840 dtex/2 | 1840 dtex/2 |
| Heat shrinking stress (N) | 6.4 | 6.4 | 6.4 | 6.4 | 4.3 | 4.7 | 4.2 | 2.8 | 0.2 | 0.2 |
| <Presence of vulcanizing stretch> | Presence | None | None | None | None | None | None | None | None | None |
| <Band ply forming step> | | | | | | | | | | |
| Heating of band cord (deg. C) | ---- | ---- | 80 | 150 | 150 | ---- | ---- | ---- | ---- | ---- |
| Extension of band cord (%) | ---- ---- | ---- | 4 | 0.4 | 0.4 | ---- | ---- | ---- | ---- | ---- |
| | | | | | | | | | | |
| High-speed durability (index) | 100 | 90 | 92 | 96 | 95 | 96 | 98 | 97 | 112 | 108 |

**[Table 2]**

| | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|
| | | | | | | | | | | | |
| <Band cord> | nylon 66 | nylon 66 | nylon 66 | nylon 66 | nylon 66 | nylon 66 | PET | PEN | PEN | aramid | rayon |
| Material | 1400 dtex/2 | 1400 dtex/2 | 1400 dtex/2 | 1400 dtex/2 | 1400 dex/2 | 940 dtex/2 | 1680dex/2 | 1680 dtex/2 | 1100 dtex/2 | 1840 dtex/2 | 1840 dtex/2 |
| Cord component | 6.4 | 6.4 | 6.4 | 6.4 | 6.4 | 4.3 | 4.7 | 4.2 | 2.8 | 0.2 | 0.2 |
| Heat shrinking stress (N) | None | None | None | None | None | None | None | None | None | None | None |
| <Presence of vulcanizing stretch> | | | | | | | | | | | |
| <Band ply forming step> | 100 | 150 | 180 | 150 | 150 | 150 | 150 | 150 | 150 | 150 | 150 |
| Heating of band cord (deg. C) | 5 | 5 | 5 | 0.5 | 10 | 5 | 5 | 5 | 5 | 0.5 | 0.5 |
| Extension of band cord (%) | | | | | | | | | | | |
| | 101 | 104 | 105 | 102 | 108 | 102 | 108 | 110 | 108 | 113 | 109 |

As shown in Tables, it was confirmed that the tire in Examples coul d improved the high-speed durability.

### DESCRIPTION OF THE REFERENCE NUMERALS

1N Green tire
2 Tread portion
3 Sidewall portion
4 Bead portion
6 Carcass
6A Carcass ply
7 Belt layer
7A Belt ply
9 Band layer
9A Band ply
15 Band forming member
16 Band cord
17 Topping rubber
18 Strip
20 Rigid core
21 vulcanizing mold
Ka Green tire forming process
Kb vulcanizing process

## Claims

1. A method for manufacturing pneumatic tire comprising
a carcass formed of a carcass pl y extending from a tread porti on through a sidewall portion to each of both bead portions,
a belt layer formed of a belt ply disposed radially outside the carcass and inside the tread portion, and
a band layer formed of a band ply disposed radially outside the belt layer;
a method comprising
a green tire forming process to form a green tire by adhering in sequence tire component members including an unvulcanised carcass ply, belt ply, and band ply on an outer surface of a rigid core, and
a vulcanizing process to vulcanize the green tire put into a vulcanizing mold with the rigid core;
wherein
the green tire forming process comprises a band ply forming step to form a band ply by winding band forming member, which is made of a band cord or a narrow band-shaped strip made of a band cord covered with topping rubber, spirally on the rigid core via the belt ply; and
in the band ply forming step,
the band forming member is spirally wound under a condition of the band forming member being heated to not less than 100 deg. C and stretched in not less than 0.5%.

2. The method for manufacturing pneumatic tire as set forth in claim 1, wherein the band cord is made of nylon cord , PET (polyethylene terephthalate) cord, or PEN (polyethylene naphthalate) cord.

3. A pneumatic tire manufactured in the method as set forth in claim 1 or 2.
